Europäisches Patentamt

European Patent Office

Office européen des brevets

(11) Publication number : 0 565 320 A2

## (12) EUROPEAN PATENT APPLICATION

(21) Application number : 93302631.2

(51) Int. Cl.⁵ : G01M 1/02

(22) Date of filing : 02.04.93

(30) Priority : 08.04.92 US 865132

(43) Date of publication of application :
13.10.93 Bulletin 93/41

(84) Designated Contracting States :
AT BE CH DE DK ES FR GB GR IE IT LI LU MC
NL PT SE

(71) Applicant : HENNESSY TECHNOLOGY
CORPORATION
1330 East 12th Street
Wilmington, Delaware 19802 (US)

(72) Inventor : Madden, Allan C
1103 Canada Road, Woodside
California 94602 (US)
Inventor : Blas, Gregory W
536 Tiffany Road, San Leandro
California94577 (US)

(74) Representative : Brereton, Paul Arthur et al
REDDIE & GROSE 16 Theobalds Road
London WC1X 8PL (GB)

(54) Method and an apparatus for sensing wheel parameters in a wheel balancing machine.

(57) An apparatus and a method for remotely optically sensing the wheel parameters in a wheel balancing machine includes a source (24) which emits a first sheet of light (24). The light is directed at the wheel and tire assembly (16) and reflects a reflected light therefrom. The reflected light is detected. The location of the junction (18) of the wheel rim and the tire of the wheel as assembly is determined from the reflected light. Means is provided for calculating the radial distance and the axial distance to the junction of the wheel rim based upon the location of the junction measured.

FIG. 3

EP 0 565 320 A2

The present invention relates to a method and an apparatus for remotely and optically sensing certain parameters in a wheel balancing machine.

Present day wheel balancers, as set forth, for example in U.S. Patents 4,423,632 and 4,499,768, spin a wheel which rests on sensors in two planes remote from the wheel. The wheel is mounted on a cantilevered spindle. The wheel balancing machine measures the vibrations in the two planes of the sensors. Using the distances of the two rims of the wheel from the two planes, together with the diameter or radius of the rims, a mathematical calculation is performed which relates the measured vibrations to equivalent unbalance masses on the rims. The machine indicates to the operator where to place the counterbalance masses so as to balance the wheel. The calculation is known in the trade as "plane separation" because it separates the vibrations as perceived at the sensors, into imbalance masses on the two separate planes, i.e. the planes of the rims. The mathematical calculation is detailed in the prior art. See U.S. Patent Nos. 2,731,834 (Fehr), 3,076,342 (Hilgers) and 3,102,429 (Hardy).

Some early balancers attempted mechanically to avoid having to calculate the equations, by moving one or both sensors into line with the desired balancing planes. See U.S. Patents 3,732,737 (Forster) or 3,910,121 (Curchod). Even a recent machine described in U.S. Patent 4,435,982 (Borner) uses this method. It now appears that such methods were first used in industrial balancers in the U.S. and Germany in the 1920's. See Klaus Feder's book AUSWUCHTTECHNIK (Springer Verlag 1977), pages 148 and ff. However, such mechanical devices have now been superseded by economical electronic devices, either analog or digital, which calculate the equations in full. See U.S. Patent No. 4,423,632.

Vital to quick accurate and efficient operation of the balancing machine is accurate measurement of the axial distances of the rims to the planes of the sensors. Because the calculation very often takes the form of a difference calculation, where one large number is subtracted from another large number to produce a zero, (e.g. with a large imbalance on one rim and no imbalance on the other) accuracies of 1/10th or even 1/20th of an inch (2.5mm or even 1.25mm) in the distance measurement is required. Measurement of the rim radius or radial distance does not have to be so accurate because it is a simple multiplier of the imbalance masses found in the difference calculation.

The usual method of measuring the axial distance from one of the planes of the sensors to one of the rims, is to use a mechanical arm with a scale on it. A caliper with a scale on it is used to measure the distance between the two rims, so the distance of the outer rim is the sum of the caliper reading and the inner rim distance. Diameter or radius is usually entered as a nominal value taken from the tire. There is a difference of about 1 1/8th inch (28mm) between the nominal diameter and the actual diameter at which the weights are placed, but this is usually calibrated into the machine and ignored. However the discrepancy can cause minor inaccuracies for various wheel shapes and sizes. In general, it would be better to enter accurate diameter measurements, preferably with some kind of measuring apparatus.

The above-mentioned measurements are usually entered into the machine by hand. More recently transducers have been attached to the measuring arm, to measure both its extension (axial distance) and rotation (radial distance), which provide measures respectively of inner rim distance and rim radius. See U.S. Patent 4,939,941.

Some European manufacturers provide a second distance arm which extends behind the wheel and is brought in from the outside to measure the distance of the outer rim.

Other manufacturers use a combined arm which is touched first to one rim and then to the other, and by means of transducers and computer software recognizes the various distances.

All of the above-mentioned methods are time-consuming and fatiguing to the operator. What has long been desired is a remote, hands-off sensing system which provides the necessary measurements quickly, accurately and reliably without the operator's intervention. One recent attempt has been exhibited using ultrasonic sensors but it is believed this will not be satisfactory, especially because of the very dirty, salty and corrosive working environment.

An automatic, remote method for measuring wheel parameters without operator intervention has been sought for many years. An early reference relating to oblique viewing of illuminated profiles of objects is in the January-February 1985 issue of "Solutions", a publication of INTEL Corporation, page 6. In that reference, an apparatus for scanning the 3-dimensional surfaces of space shuttle tiles, timber mill logs and packages on a conveyor was disclosed. In addition, U.S. Patent Nos. 2,066,996 (Morioka, 1937) and 2,163,124 (Jeffreys, 1939), both disclose using photographs to produce sculptures. U.S. Patent 2,607,267 (Fultz, 1952) used oblique viewing in machine shops for the inspection of machine parts. U.S. Patent No. 3,187,185 (Milnes, 1965) viewed sheet-steel in rolling mills, while railway track and railway wheels were measured by oblique viewing in U.S. Patent Nos. 4,798,964 and 4,915,504.

U.S. Patent No. 4,188,544 discloses a scanning and processing system for timber mill logs, and U.S. Patent 4,498,778 discloses the system used for measuring the space shuttle tiles.

2

The present invention is in one aspect consists of an apparatus which measures a characteristic (such as a radial distance) of a wheel rim having a tire mounted thereon (hereinafter called "wheel assembly"). The radial distance is measured from the center of the wheel assembly to a junction between the wheel and the tire. The wheel assembly is mounted on a wheel balancing machine which measures an axial distance of the wheel assembly to a first location on the wheel balancing machine. The apparatus comprises means for generating a thin sheet of light. The thin sheet of light is directed onto the wheel or object to be balanced. The light outlines a profile of the wheel. This profile is then viewed by a 2-dimensional optical detector from the side, at an acute angle to the plane of the light sheet, and a foreshortened profile or cross-section of the tire and wheel is projected onto the detector. Computer software is used to detect the discontinuity in the image corresponding to the tire/wheel interface, and its position is related, either by 3-dimensional trigonometry, or by a look-up table substituting for such trigonometry, to the desired distance and radius of the place on the wheel rim where an imbalance compensating weight would be mounted.

The present invention also relates to a method of operating this apparatus.

Embodiments of the invention will now be described by way of example with reference to the accompany drawings in which:

Figure 1 is a perspective view of a wheel balancing machine incorporating apparatus according to the present invention.

Figures 2(a & b) are schematic side views of the wheel balancing machine of Figure 1, showing the various parameters to be measured by the apparatus according to the present invention.

Figure 3 is a perspective view of a portion of the apparatus according to the present invention showing a sheet of light generated and incident upon a wheel rim having a tire mounted thereon.

Figure 4A is a partial cross-sectional view of the apparatus shown in Figure 1 taken along the line 4 - 4, showing the relative positions of the wheel assembly, light sheet, reflected light and the optical sensor.

Figure 4B is a schematic block diagram showing the preferred mode optical components for generating the thin sheet of light.

Figure 5 is a side view of the collection of light reflected from the wheel assembly onto an optical sensor.

Figure 6 is a view of the image reflected from the wheel assembly, onto the optical sensor.

Figure 7 (A-D) are various geometries and equations showing the relationship between the incident light and the reflected light from the wheel assembly to calculate the parameters used in the apparatus of the present invention.

Figure 8a is a schematic view of the raw data received by the optical sensor.

Figure 8b is a schematic view of the raw data of Figure 8a, after processing and filtering.

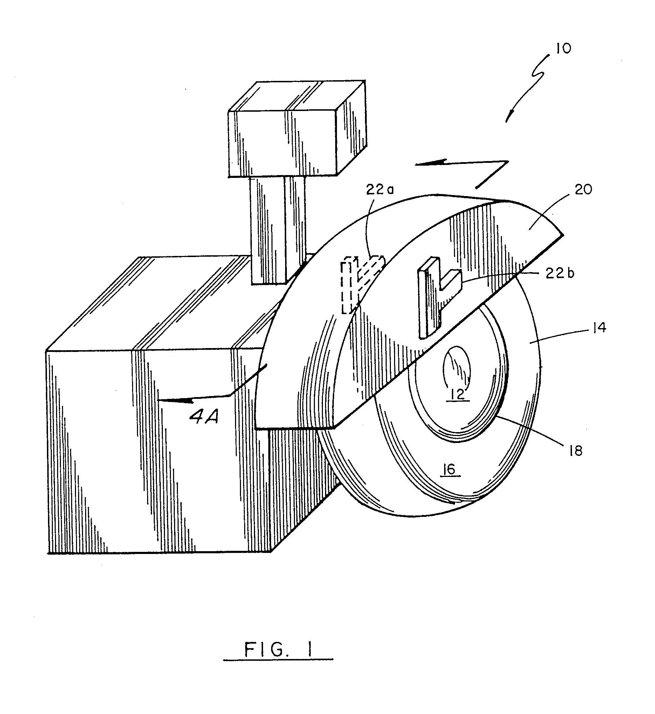

Referring to Figure 1, there is shown a wheel balancing machine 10, incorporating apparatus according to the present invention, for measuring various parameters of a wheel rim 12 having a tire 14 mounted thereon. As discussed hereinafter, the combination of the wheel rim 12 with a tire 14 mounted thereon will be referred to as a wheel assembly 16.

In the apparatus 10, a protective hood 20 is hingedly attached and covers a portion of the wheel assembly 16. Located on both sides of the hood 20 are apparatuses 22a and 22b which measure various parameters of the wheel assembly 16. The apparatuses 22a and 22b are identical and thus, for the purpose of this specification, only one apparatus 22 will be described.

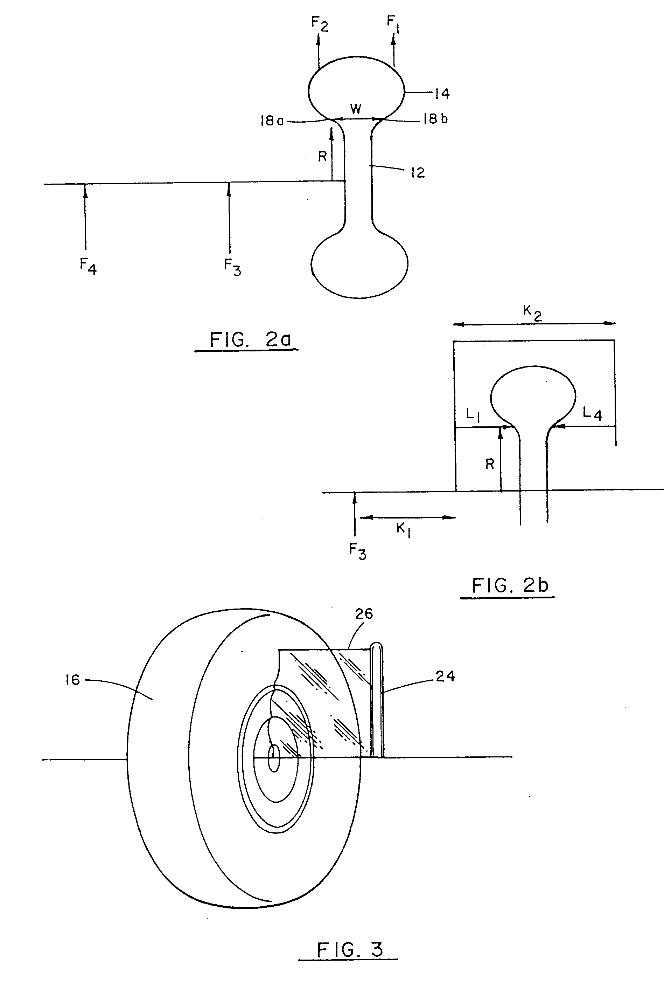

The wheel balancing machine 10 measures various parameters of the wheel assembly 16. In particular, the wheel balancing machine 10 measures the radial distance of the wheel assembly 16, i.e. the distance R measured from the center of the wheel assembly 16 to a location where the tire 14 is mounted on the wheel rim 12 (see Figure 2a). The junction where the tire 14 is mounted on the wheel rim 12 will be referred as the wheel junction 18. There are two symmetrically located wheel junctions: 18a and 18b, on each side of the wheel assembly 16.

The wheel balancing machine 10 also measures the axial distance from a plane defined by the inner wheel junction 18a (see Figure 2a) to a plane defined by one of the sensors, located either at $F_4$ or $F_3$. In addition, the machine 10 also measures the axial distance from the plane defined by the sensor $F_4$ or $F_3$ to the outer wheel junction 18b. In Figure 2b, there is shown the measurement of the axial distance from the plane defined by the sensor $F_3$ to the inner rim 18a as being the sum of $K_1$ and $L_1$, where $K_1$ is the distance from the sensor $F_3$ to the apparatus 22a and is a constant, and $L_1$ is the distance between the apparatus 22a and the wheel rim 18a as measured by the apparatus 22a. Similarly, the distance from the sensor $F_3$ to the outer rim 18b is the sum of $K_1$ and $K_2$ minus $L_4$, where $K_2$ is the width of the hood 20 and is a constant, and $L_4$ is the distance measured by the apparatus 22b from the apparatus 22b to the wheel rim 18b. The width W of the wheel assembly 16 is simply $K_2$ minus $L_1$ minus $L_4$.

Referring to Figure 3, the apparatus 22 is an optical assembly comprising a light source 24 which projects or generates a sheet 26 of light and is directed to impinge the wheel assembly 16. The sheet 26 of light is relatively thin (on the order of 1mm or .040 inch) and relatively long (on the order of 200mm or 8 inches). The sheet 26 is directed to impinge the wheel assembly 16 substantially in a radial direction, i.e. the sheet 26 of light impinges the wheel assembly 16 and illuminates it from about 100mm or four inches from the center of the wheel assembly to the bag or side wall of the tire 14, in a radial direction.

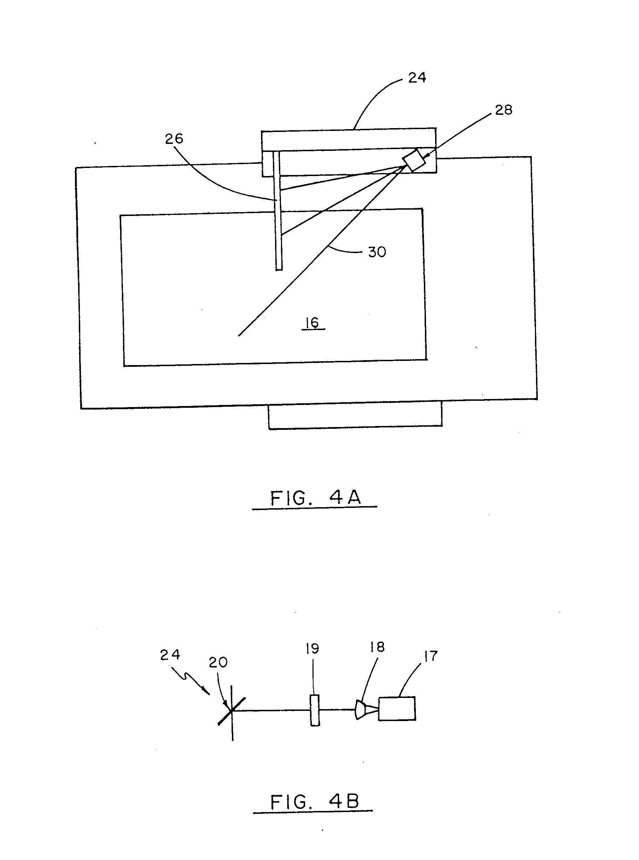

The light source 24 can be an incandescent lamp, a laser or a fluorescent source. The preferred mode is a laser diode 17 which is focused by lens 18 and which is then spread out by a cylindrical lens 19, for example a length of 7mm diameter pyrex glass. To minimize the axial thickness of the light sheet source, the light is reflected through 90° by a 45° mirror 20 as shown in Figure 4B. This has no effect on the discussion that follows.

Referring to Figure 4A, located to one side of the source 24 of light is an optical sensing assembly 28. The optical sensing assembly 28 is mounted at approximately 200mm or 8 inches above the center of the wheel 12 and about 325mm or 13 inches to one side of the vertical line of the light sheet 24. The optical sensing assembly 28 receives a second light 30 which is reflected from the wheel assembly 16. The second light 30 reflected from the wheel assembly 16 is an image of the contour or profile of the wheel assembly 16. The second light 30 is detected by the optical sensing assembly 28.

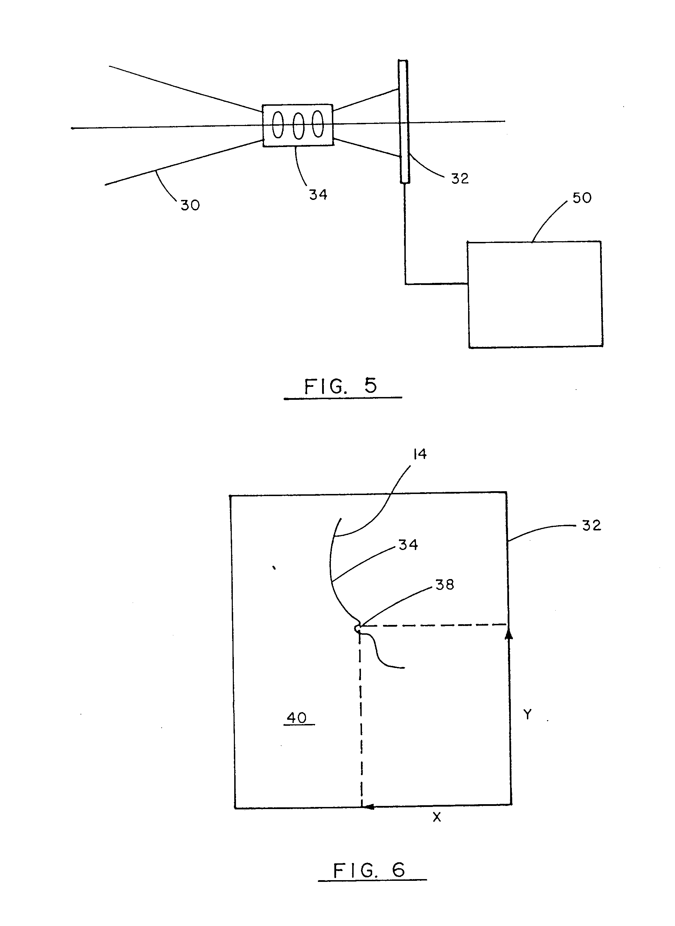

Referring to figure 5, there is shown a side view of the optical sensing assembly 28. The optical sensing assembly 28 comprises one or more. lenses 34 to gather the second light 30, which is light reflected from the wheel assembly 16, and to focus it onto an optical sensor 32. The one or more lenses 34 can be a double convex lens having a focal length of approximately 4.5 mm, available from, for example, Edmund Scientific Co., of Barrington, New Jersey (part number C32,022). The optical sensor 32 can be a two dimensional CCD optical array such as a type TC211 manufactured by Texas Instruments. However, any other type of two dimensional sensor can be used. Similarly, a one dimensional optical array can also be used in conjunction with a mechanical scanning array mechanism. However, such a combination of a one dimensional optical sensing array and a mechanical scanning array would be expensive or would not be reliable since it would have many moving parts.

Referring to Figure 6, there is shown a typical image 40 of the contour of the wheel assembly 16 appearing on the optical sensor 32. The image would normally be inverted, but is shown here right side up to facilitate the description. The distinctive features of the image 40 are the smooth curve 34 in the upper area, which represents the bag or side wall of the tire 14, and a discontinuity 38 caused by the transition of the tire 14 to the wheel rim 12. The discontinuity 38 in the image 40 represents the wheel junction 18a, where the balancing weight would be attached. Once the discontinuity 38 is detected, the distance of the sensing apparatus 22a to the wheel junction 18a in an axial direction can be calculated. That calculation will be discussed hereinafter.

Once the axial distance from the sensing apparatus 22a to the wheel junction 18a is calculated, and because the distance of the sensing apparatus 22a to either $F_3$ or $F_4$ is known (these being fixed locations), then the axial distance from either $F_3$ or $F_4$ to the wheel junction 18a can be calculated. Similarly, using sensing apparatus 22b, on the other side of the wheel assembly 16, the axial distance of the wheel junction 18b to either $F_3$ or $F_4$ can be calculated. Finally, with the optical sensing assemblies 22a and 22b on both sides of the wheel assembly 16 the width W of the wheel assembly at the wheel junction 18 can be calculated. Similarly, as will be shown, the radial distance R from the center of the wheel assembly 16 to the wheel junction 18 can also be calculated.

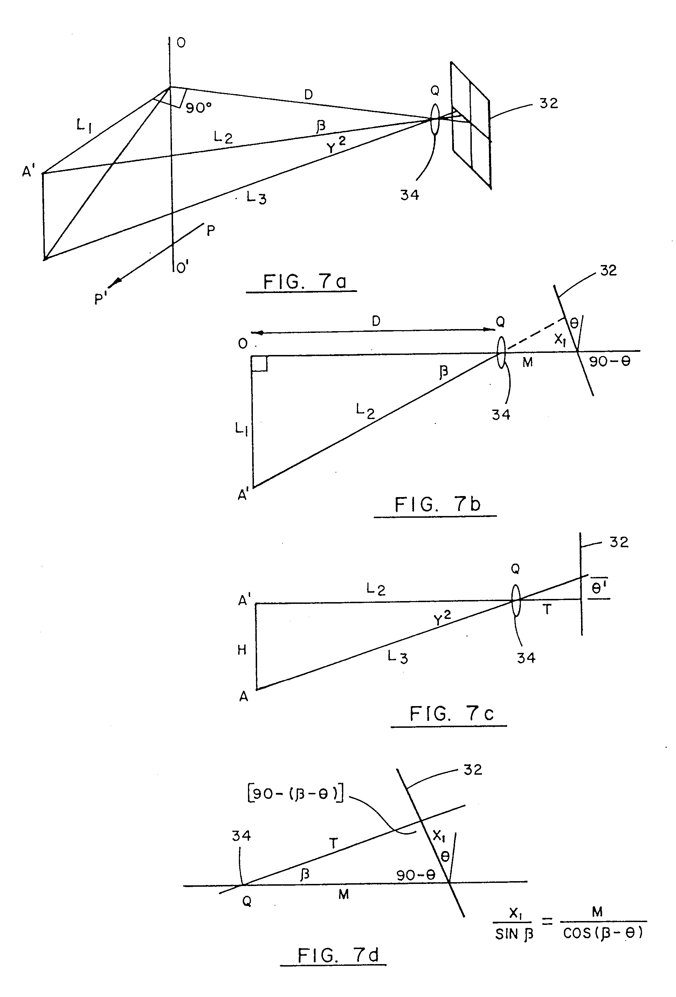

Referring to Figure 7, the trigonometry is shown for the calculation of the horizontal distance $L_1$ of a point A' from a line 0 - 0' and the vertical distance H between a point A and a point A'. The distance $L_1$ corresponds to the axial distance mentioned previously, and the distance H, together with a constant, correspond to the radial distance of a point A on the wheel as viewed by the optical sensor 32. Point 0 is at the same horizontal level as point Q where the focussing lens 34 is located. A sheet of light 26 is projected from the vertical axis 0 - 0' in the direction P - P' towards a vertical line A - A'. The light 30 reflected from the line A - A' is focused by the lens 34 at Q. The image of the reflected light 30 at A - A' is projected into the optical sensor 32 which is positioned substantially perpendicular to the plane defined by the points 0 - A' - Q, but is at an angle (90 - Θ) to a vertical plane through the line 0 - Q. See Figures 7B and 7D. The angle (90 - Θ) can be on the order of 60 degrees. The reflected light 30 passes through the lens 34 at Q into the optical sensor 32.

The other parameters are as follows: $L_1$ being the distance from the point 0 to A'. $L_2$ is the distance from point A' to the lens 34 at Q. D is the distance from the plane 0 - 0' - A' of the light sheet to the lens 34 at Q. T is the distance along the direction of $L_2$ from the lens 34 at Q to the optical sensor 32. M is the distance from the lens 34 along the direction of D to the optical sensor 32. $X_1$ is the distance between T and M imaged on the optical sensor 32 (see Figure 7d).

From figures 7c and 7d, the various parameters are calculated as follows:
Referring to Figure 7D:

$$x_1 = \frac{M \sin \beta}{\sin [90 - (\beta - \Theta)]}$$

i.e.:

$$\frac{\sin \beta}{\cos (\beta - \Theta)} = \frac{x_1}{M}$$

Simplifying,

$$\tan \beta = \frac{X_1 \cos \Theta}{M - X_1 \sin \Theta}$$

Also $\dfrac{T}{\cos \Theta} = \dfrac{X_1}{\sin \beta}$

i.e.: $T = \dfrac{x_1 \cos \Theta}{\sin \beta}$

and from Figure 7C: $\dfrac{Y_1}{T} = \tan \gamma_2$

so $\gamma_2 = \arctan \dfrac{Y_1}{T}$

Now $L_2 = \dfrac{D}{\cos \beta}$ (from Figure 7B)

and $L_1 = D \tan \beta$ (from Figure 7B) $= \dfrac{D X_1 \cos \Theta}{M - X_1 \sin \Theta}$

and $H = L_2 \tan \gamma_2 = \dfrac{D \tan \gamma_2}{\cos \beta} = \dfrac{D Y_1}{T \cos \beta}$

$= \dfrac{D Y_1 \sin \beta}{X_1 \cos \Theta \cos \beta} = \dfrac{D Y_1 \tan \beta}{X_1 \cos \Theta} = \dfrac{D Y_1}{M - X_1 \sin \Theta}$

$H$ and $L_1$ are the radial distance and axial distance to be calculated, respectively.

These two distances can be converted into the wheel diameter and the distance of the wheel rim from the front sensor by the simple addition of constants representing the physical position of the optical apparatus from the axis of rotation and from the front sensor.

To locate the discontinuity 38 on the contour image 40, which represents the location of the wheel rim 18a, the following algorithms may be employed.

A first method is to look for major changes in the slope of the curve. If the contour image 40 is viewed as a mathematical function

$$x = f(y)$$

then the differential $\dfrac{dx}{dy} = f(y)$

gives the slope of the curve.

As one proceeds from the top of the curve towards the bottom, for high Y values the slope is small, and the rate of change of slope is low. But when the discontinuity 38 is reached, there is a large change in slope. This indicates that the discontinuity 38 has been reached.

A second method is to use linear extrapolation. Starting at the bottom again, the successive readings can be denoted.

$$x_i = f(y_i)$$

Pairs of successive values are extrapolated to provide the next expected value

$$x_{i+2} = 2 x_{i+1} - x_i$$

The extrapolated value is then compared to the actual value. In the high Y area at the top of the curve 34 where the curve 34 is smooth, the actual value will match the extrapolated value. But when the discontinuity 38 caused by the rim is reached, there is a large difference.

Other more complex algorithms could be used, e.g., comparison to profiles stored in memory, or higher level mathematical extrapolations well known in the literature.

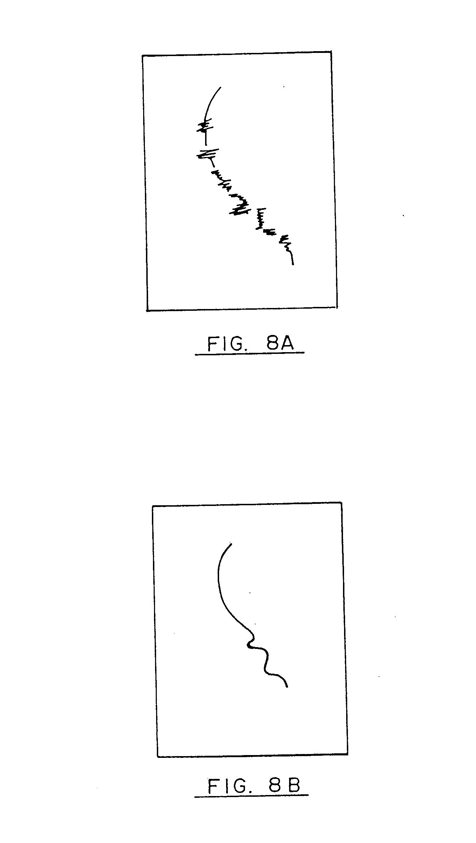

In practice, the data obtained from the CCD sensor 32 is processed by circuitry as described in the Texas Instruments Inc. Optoelectronics and Image Sensor Databook, 1987, No. SOYD002, Application Notes commencing a page 7-29. The data obtained from the CCD sensor 32 is not initially a thin smooth straight line as shown in Figure 6. It is in fact like that shown in Figure 8A. The line appears blurred and discontinuous. The first step in processing the data is to apply a median filter, which is to take the center point of the data on any horizontal row of the CCD, e.g. if there are 9 spots on a horizontal row, the middle spot is chosen. After that the line is smoothed by first interpolating points where there are gaps in the line, and thereafter applying a simple low-pass filter, e.g. averaging the values for 3 adjacent horizontal rows.

Thereafter a further smoothing can be applied if desired. It is clear that more sophisticated smoothing techniques, e.g. using properly designed, minimal side-lobe filters would give enhanced results, but this has not yet been done. Finally, a simple numerical differentiation is carried out over groups of 3 or 5 lines. The differential is minimal along section 34 (Figure 6) of the line, which represents the bag of the tire, but becomes large where the curve becomes jagged, i.e. upon reaching the tire wheel interface, e.g. at point 38.

The calculation of the radial and axial distances can be performed by any computer 50 with suitable software using the above relationship. Such techniques are well known in the art. The computer 50 can be the same computer that is used in the conventional balancing machines to calculate the forces of imbalance. However, for simplicity, a separate computer is preferred.

From the foregoing, it can be seen that an improved apparatus has been disclosed for remotely sensing through optical means various parameters of a wheel in a wheel balancing machine. The apparatus is rugged and is reliable and is easy to use and provides automatically the measurement of various parameters.

The present apparatus can also be used to detect variations in tire and wheel position as the wheel rotates. Thus, wheel and tire run-out can be measured without rollers touching the wheel, and in fact higher accuracy can be achieved because individual dents to the wheel can be ignored. Also, the profile of the sidewall of the tire, as the tire rotates, can be measured to detect side wall bubbles or separations. Finally, the present invention can be used for examining tread depth on the wearing surface of a tire. A sheet of light would be projected onto the tread of the tire and an optical sensor would observe the tread profile from an acute angle.

## Claims

1. A method of measuring a characteristic of a wheel assembly having a wheel rim with a tire mounted thereon, said wheel assembly is mounted on a wheel balancing machine, said method comprising:
   generating a first sheet of light;
   directing said first sheet of light at said wheel assembly and reflecting a reflected light there from;
   detecting said reflected light;
   measuring one or more parameters of said wheel assembly from said reflected light; and
   calculating said characteristic based upon the one or more parameters measured.

2. The method of Claim 1 wherein the characteristic is a radial distance of the wheel rim.

3. The method of Claim 1 wherein the characteristic is an axial distance of the wheel rim from a fixed location on said balancing machine.

4. The method of Claim 1 wherein the characteristic is a radial distance of the wheel rim and an axial distance of said wheel assembly to a first location on said wheel balancing machine.

5. The method of Claim 4 wherein the parameters are the location of the junction of said wheel rim and said tire.

6. The method of Claim 5 further comprising:
   forming an image of the contour of said wheel assembly by said reflected light; and
   detecting said image of the contour from said reflected light.

7. The method of Claim 6, wherein said location of the junction is measured by:
   measuring changes in the slope of the contour, wherein said location is selected by a large change in the slope.

8. The method of Claim 6, wherein said location of the junction is measured by:
   linearly extrapolating a successive pair of adjacent values;
   comparing the extrapolated value to the actual value;
   selecting the junction as the largest difference between the extrapolated value and the actual value.

9. The method of Claim 6, where said location of the junction is measured by:
   comparing the image of the contour to contours of wheel and tire assemblies stored in memory to determine the location of the junction.

10. The method of Claim 1 wherein the characteristic is the axial and the radial run-outs of both the wheel and the tire.

11. The method of Claim 10 wherein the parameters are variations in the contours of the wheel and the tire as the wheel is rotated.

12. The method of Claim 1 wherein the characteristic is the amount of usable tread in the tire.

13. The method of Claim 12 wherein the parameter is the tread depth.

14. An apparatus for measuring a radial distance of a wheel rim having a tire mounted thereon at a junction between said wheel and said tire (hereinafter: "wheel assembly"), said wheel assembly is mounted on a wheel balancing machine for measuring an axial distance of said wheel assembly to a first location on said wheel balancing machine, said apparatus comprising:
    means for generating a first sheet of light;
    means for directing said first sheet of light at the junction of the wheel assembly, and for reflecting a first reflected light therefrom;
    means for detecting said first reflected light;
    means for measuring the location of the junction of the wheel rim and the tire of the wheel assembly from the first reflected light; and
    means for calculating the radial distance and the axial distance based upon the location of the junction measured.

15. The apparatus of Claim 14, wherein said detecting means is a two-dimensional optical array.

16. The apparatus of Claim 14, wherein said detecting means is a two-dimensional CCD device.

17. The apparatus of Claim 15 further comprising:
    a frame hingedly movable about an axis to enclose a portion of said wheel assembly; and
    wherein said generating means, directing means and detecting means are mounted in said frame on one side of said wheel assembly.

18. The apparatus of Claim 16 further comprising:
    a second means for generating a second sheet of light;
    a second means for directing said second sheet of light at the junction of the wheel rim and the tire, and for reflecting a second reflected light therefrom;
    a second means for detecting said second reflected light;
    second means for measuring the location of the junction of the wheel rim and the tire of the wheel assembly from the second reflected light.

19. The apparatus of Claim 17 wherein said first sheet of light is directed at a first junction of the wheel assembly.

20. The apparatus of Claim 18 further comprising:
    a second means for generating a second sheet of light;
    a second means for directing said second sheet of light at a second junction of the wheel rim and the tire, and for reflecting a second reflected light therefrom, said second junction located substantially opposite said first junction;
    a second means for detecting said second reflected light;
    second means for measuring the location of said second junction of the wheel rim and the tire of the wheel assembly from the second reflected light.

21. An apparatus for measuring the tread depth of a tire comprising:
    means for generating a sheet of light;
    means for directing said sheet of light at said tread of said tire and for reflecting a reflected light therefrom;
    means for receiving said reflected light; and
    means for measuring the depth of said tread based upon said received reflected light.

FIG. 1

$F_2$    $F_1$

18a    W    18b

R    12

$F_4$    $F_3$

14

FIG. 2a

$K_2$

$L_1$    $L_4$

R

$K_1$

$F_3$

FIG. 2b

26

16    24

FIG. 3

FIG. 4A

FIG. 4B

FIG. 5

FIG. 6

FIG. 7a

FIG. 7b

FIG. 7c

$$\frac{X_1}{SIN\ \beta} = \frac{M}{COS(\beta-\theta)}$$

FIG. 7d

FIG. 8A

FIG. 8 B